# EUROPEAN PATENT SPECIFICATION

(11) **EP 3 842 820 B1**
(45) Date of publication and mention of the grant of the patent: **03.07.2024**
(21) Application number: 20204630.6
(22) Date of filing: 29.10.2020
(51) Int. Cl.: G01S 5/02, G01S 5/14, G01S 11/06

(54) **POWER POSITIONING METHOD AND POWER POSITIONING DEVICE**
VERFAHREN ZUR SIGNALSTÄRKEPOSITIONIERUNG UND VORRICHTUNG ZUR SIGNALSTÄRKEPOSITIONIERUNG
PROCÉDÉ DE POSITIONNEMENT DE PUISSANCE ET DISPOSITIF DE POSITIONNEMENT DE PUISSANCE

(30) Priority: 24.12.2019 TW 108147431
(43) Date of publication of application: 30.06.2021
(73) Proprietor: Gunitech Corp., Hsinchu County 307 (TW)
(72) Inventor: TSENG, Yu-Chee, Qionlin Township Hsinchu County 307 (TW); CHIANG, Ting-Hui, Qionlin Township Hsinchu County 307 (TW); HUANG, Kai-Cheng, Qionlin Township Hsinchu County 307 (TW); SHIU, Huan-Ruei, Qionlin Township Hsinchu County 307 (TW); KAO, Hsin-Yi, Qionlin Township Hsinchu County 307 (TW); HSU, Chung-Liang, Qionlin Township Hsinchu County 307 (TW)
(74) Representative: Viering, Jentschura & Partner mbB Patent- und Rechtsanwälte

(56) References cited:
- EP-A1- 2 469 298
- JP-A- 2010 239 331
- US-A1- 2004 203 904
- US-A1- 2018 213 356
- US-A1- 2019 331 760

## Description

### BACKGROUND OF THE INVENTION

### 1. Field of the Invention

The present invention relates to a power positioning method and a power positioning device, particularly to a power positioning method and a power positioning device thereof using positioning signals of different transmission powers for positioning.

### 2. Description of the Related Art

US 2019/331760 A1 discloses a power positioning method, used for a power positioning device to find out a device location of a device to be measured in a space, the space comprising a plurality of known location, the method comprising the following steps: controlling the device to be measured to transmit a plurality of positioning signals by a plurality of transmission powers; causing the plurality of known location devices to receive the plurality of positioning signals, and recording a plurality of positioning signal intensities, a plurality of corresponding beacon types and IDs of the plurality of known location devices to a database; finding out the known location device with a larger signal intensity among the received plurality of positioning signals; taking out a signal intensity-distance function from the database, wherein the distances correspond to the RSSIs; finding out the plurality of known location devices with the larger signal intensity among different powers; and grouping the plurality of known location devices according to a plurality of power to find out the device location of the device to be measured.
Further power positioning methods and devices are known from US 2018/213356 A1, EP 2 469 298 A1, JP 2010 239331 A, and US 2004/203904 A1.
Conventionally, the positioning method for indoor devices often involved trilateral positioning. The distance required for trilateral positioning is usually calculated using signal intensity or time of arrival (ToA). Therefore, the signal intensity or the accuracy of ToA calculation may affect the inferred distance, and then the accuracy of the trilateral positioning. With a positioning method relying on transmitting signals at the fixed power, the positioning accuracy is limited by the decline of a single power signal.

Today's mobile devices, like mobile phones, are often equipped with other sensors with different functions. Sensors such as gyroscopes and electronic compasses can assist and improve positioning accuracy. However, in consideration of the device cost, the indoor positioning device may not be equipped with a variety of sensors. Without the assistance of other sensors, indoor positioning can only rely on a signal intensity to estimate a distance and use this data for positioning. However, in the prior art, the signal intensity of Bluetooth devices often varies greatly, resulting in large positioning errors.

Accordingly, it is necessary to provide a new power positioning method and a power positioning device to solve the problem in the prior art.

### SUMMARY OF THE INVENTION

It is a major objective of the present invention to provide an improved power positioning method that can achieve using different power signals for positioning.

It is another objective of the present invention to provide a power positioning device used for the above method.

To achieve the above objectives, a power positioning method according to independent claim 1and a power positioning device according to independent claim 5 are provided. The dependent claims show further embodiments of the said method and device, respectively.

-

### BRIEF DESCRIPTION OF THE DRAWINGS

FIG. 1 is a system architecture diagram showing configuration of a power positioning device of the present invention;
FIG. 2 is a flowchart showing steps of a data setting process of the present invention;
FIG. 3 is a system architecture diagram showing the power positioning device being positioned of the present invention;
FIG.4 illustrates a flowchart of the power positioning method of the present invention;
FIGs.5A-5B illustrate schematic diagrams of the concentric circles of the power positioning method under different transmission powers of the present invention;
FIG. 5C illustrates a schematic diagram of the triangulation process for the intersection of the power positioning method of the present invention; and
FIG. 5D illustrates a schematic diagram of finding the smallest concentric circle according to the power positioning method of the present invention.

### DETAILED DESCRIPTION OF THE PREFERRED EMBODIMENT

Hereafter, the technical content of the present invention will be better understood with reference to preferred embodiments. Embodiments which do not comprise all features of the independent claims are included for highlighting specific aspects of the invention.

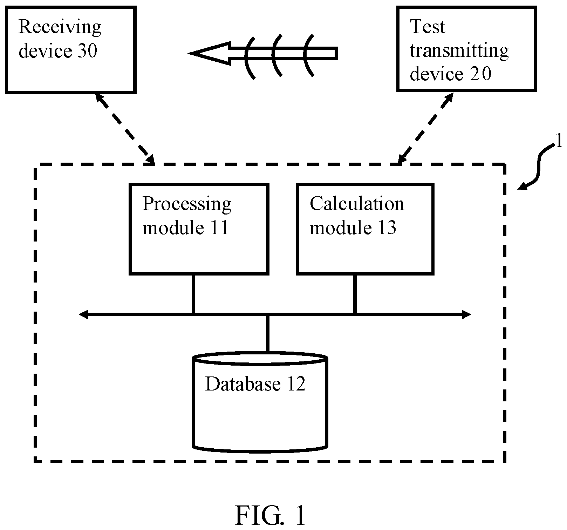

Please first refer to FIG. 1 for a system architecture diagram showing configuration of a power positioning device of the present invention.

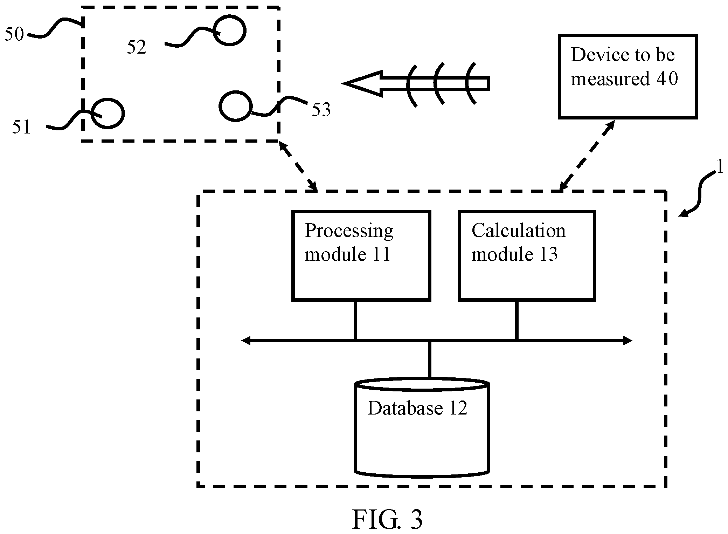

In an embodiment, a power positioning device 1 includes a processing module 11, a database 12 and a calculation module 13 electrically connected to each other. The power positioning device 1 is used to find a device location of a device to be measured 40 in a space by using a known location device 50 (as shown in FIG. 3). Before finding out the device to be measured 40, the power positioning device 1 can also use a test transmitting device 20 and a receiving device 30 to create the required data, but the present invention is not limited thereto. Specifically, all the test transmitting device 20, receiving device 30, the device to be measured 40 and the known location device 50 can send and receive wireless signals. The wireless signals can be Bluetooth signals, and the test transmitting device 20, the receiving device 30, the device to be measured 40, and the known location device 50 can be the same or different home appliances, computer equipment or mobile devices, etc., but the present invention is not limited thereto.

It should be noted that each module in the power positioning device 1 may be configured as a hardware device, software program in combination with hardware device, or firmware in combination with hardware device. For example, a computer program product may be stored in a computer readable medium and read and executed to achieve the functions of the present invention, and may also be configured in a cloud environment or a virtual server. However, the present invention is not limited in the manner described above. Additionally, the preferred embodiment of the present invention described here is only illustrative. To avoid redundancy, all the possible combinations of changes are not documented in detail. The processing module 11, database 12 or calculation module 13 can be provided on the same device or separately in different devices, or can be provided in any of the test transmitting device 20, the receiving device 30, the device to be measured 40 or the known location device 50, but the present invention is not limited thereto.

Accordingly, in an embodiment of the present invention, the processing module 11 sets a plurality of transmission powers of the test transmitting device 20, so the test transmitting device 20 can emit a plurality of test signals. Then, the receiving device 30 receives the plurality of test signals at a plurality of corresponding distances from the test transmitting device 20, for example, at a distance of 10 cm, 20 cm, or a distance between 1 m and 6 m, and transmits different test signals with different transmission powers. However, the present invention is not limited to the above values. Accordingly, the processing module 11 detects intensities of a plurality of test signals received by the receiving device 30 and records the intensities of the plurality of test signals and the plurality of corresponding distances to the database 12. Finally, the calculation module 13 calculates the signal intensity-distance function and signal intensity-distance standard deviation function from the numerical calculation of database 12, and stores them in the database 12.

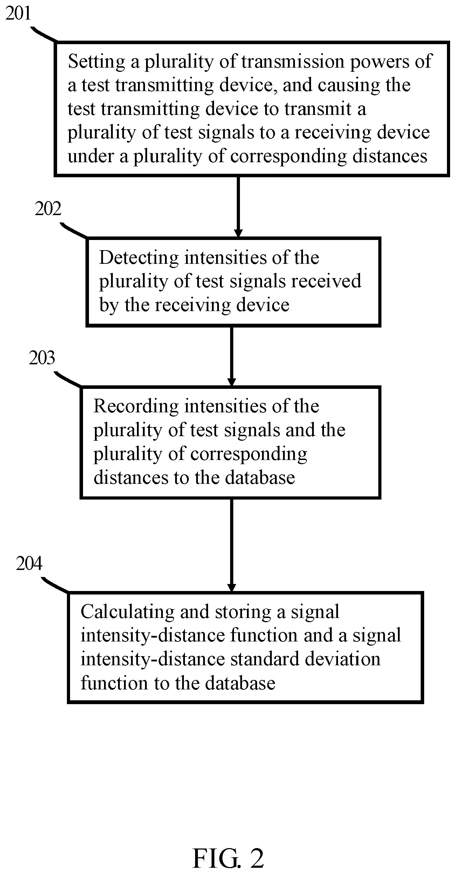

Then, please refer to FIG. 2 for a flowchart showing steps of a data setting process in the present invention. It should be noted here that although the following uses the above power positioning device 1 as an example to illustrate the data setting process of the present invention, the data setting process of the present invention is limited to the power positioning device 1 according to claim 5.

First of all, in Step 201: Setting a plurality of transmission powers of a test transmitting device, and causing the test transmitting device to transmit a plurality of test signals to a receiving device under a plurality of corresponding distances.

First, the processing module 11 sets a plurality of transmission powers of the test transmitting device 20. Therefore, the test transmitting device 20 can emit a plurality of test signals. Then, the receiving device 30 is allowed to receive the plurality of test signals at a plurality of corresponding distances from the test transmitting device 20, for example, at a distance of 10 cm, 20 cm, or a different distance between 1 m and 6 m.

Next, in Step 202: Detecting intensities of the plurality of test signals received by the receiving device.

The processing module 11 detects signal intensities of all signals received by the receiving device 30.

Then, in Step 203: Recording intensities of the plurality of test signals and the plurality of corresponding distances to the database.

The processing module 11 stores the signal intensities of all test signals received by the receiving device 30 and the corresponding distances of the test signals into the database 12.

Finally, in Step 204: Calculating and storing a signal intensity-distance function and a signal intensity-distance standard deviation function to the database.

Finally, according to the signal intensities of all the signals and the corresponding distances of the signals, the calculation module 13 can calculate the signal intensity-distance function and signal intensity-distance standard deviation function for each different transmission power to know the relationship between the signal intensity received by the receiving device 30 and the test transmitting device 20 and the standard deviation. Then, the calculation module 13 can store the functions in the database 12. In this way, the data setting process of the present invention can be completed.

Hereafter, please refer to FIG. 3 for a system architecture diagram of a power positioning device performing positioning of the present invention.

After the signal intensity-distance function and signal intensity-distance standard deviation function are established in the database 12, the power positioning device 1 can use a plurality of known location devices 50 to find out a device location of the device to be measured 40 in a space. It should be noted that although an embodiment of the present invention uses the method of directly performing the data setting process to get the signal intensity-distance function and signal intensity-distance standard deviation function, the present invention does not limit the data setting process to be performed every time to re-establish the signal intensity-distance function and signal intensity-distance standard deviation function in the database 12. The signal intensity-distance function and signal intensity-distance standard deviation function can be preset to the device to be measured 40 or the known location device 50.

Accordingly, the processing module 11 controls the device to be measured 40 to emit a plurality of positioning signals at a plurality of transmission powers, such that the plurality of known location devices 50 receive the plurality of positioning signals, and record the intensities of the plurality of positioning signals, a plurality of corresponding receiving time and the locations of the plurality of known location devices 50 to the database 12. The plurality of known location devices 50 also receive an identification code of the device to be measured 40, thereby identifying the device to be measured 40. This identification code will also be stored in the database 12. As such, the processing module 11 finds out a plurality of devices with the larger signal intensity in the received plurality of positioning signals, such as the known location devices 51, 52, 53. Finally, the calculation module 13 can find out the device location of device to be measured 40 according to the signal intensity-distance function and the signal intensity-distance standard deviation function from the locations of the known location devices 51, 52, 53.

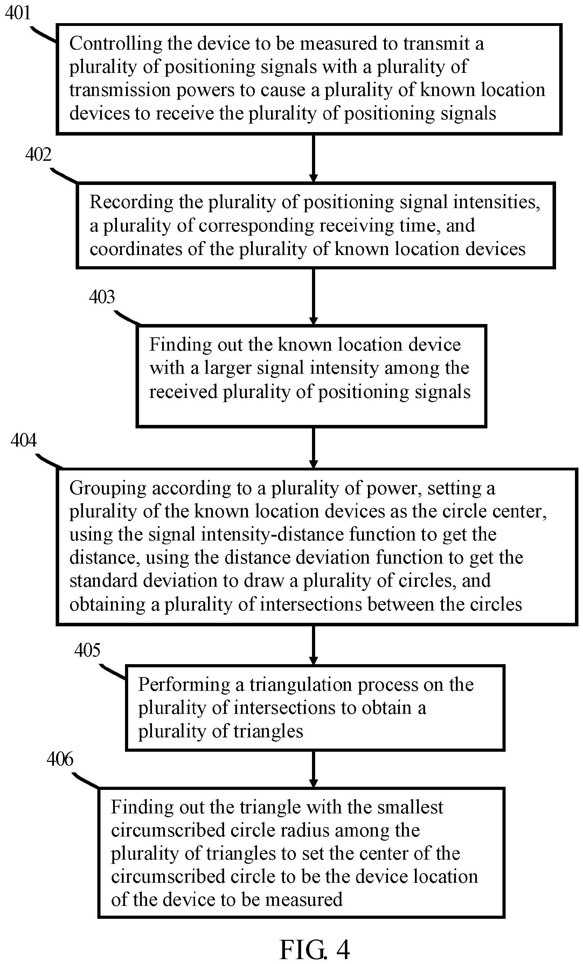

For the detailed method of finding out the device location of device to be measured 40, please refer to Figure 4 related to a flowchart showing steps of a device positioning process of the present invention.

First of all, in Step 401: Controlling the device to be measured to transmit a plurality of positioning signals with a plurality of transmission powers to cause a plurality of known location devices to receive the plurality of positioning signals.

First, when the device to be measured 40 enters a space, the processing module 11 first controls the device to be measured 40 to transmit positioning signals with different transmission powers. In this way, the different known location device 50 can receive the positioning signal of the device to be measured 40. The plurality of known location devices 50 also receive an identification code of the device to be measured 40.

Next, in Step 402: Recording the plurality of positioning signal intensities, a plurality of corresponding receiving time, and coordinates of the plurality of known location devices.

Since the device to be measured 40 transmits positioning signals with different transmission powers, after the known location device 50 receives the positioning signal, the known location device 50 sends all the positioning signals, the corresponding receiving time and coordinates of the known location device 50 back to the database 12.

Further, in Step 403: Finding out the known location device with a larger signal intensity among the received plurality of positioning signals.

From the data of database 12, the processing module 11 finds out the known location devices 51, 52, 53 in a plurality of positioning signals that have received a larger signal intensity.

Then, in Step 404: Grouping according to a plurality of power, setting a plurality of the known location devices as the circle center , using the signal intensity-distance function to get the distance, using the distance deviation function to get the standard deviation to draw a plurality of circles, and obtaining a plurality of intersections between the circles.

Next, the calculation module 13 queries the signal intensity-distance function and the signal intensity-distance standard deviation function according to the plurality of positioning signal intensities, the plurality of corresponding receiving times and the known location devices with the larger intensity. The known location devices 51, 52, 53 at different powers are grouped, the fixed point coordinates of the known location devices 51, 52, 53 are taken as the center of the circle, and the distance under this signal intensity according to the signal intensity-distance function can be obtained, that is, the distance is set as the base radius. Then, the signal intensity-distance standard deviation function is used to find out the distance standard deviation under the signal intensity, that is, the standard deviation is set as the basis for radius adjustment.

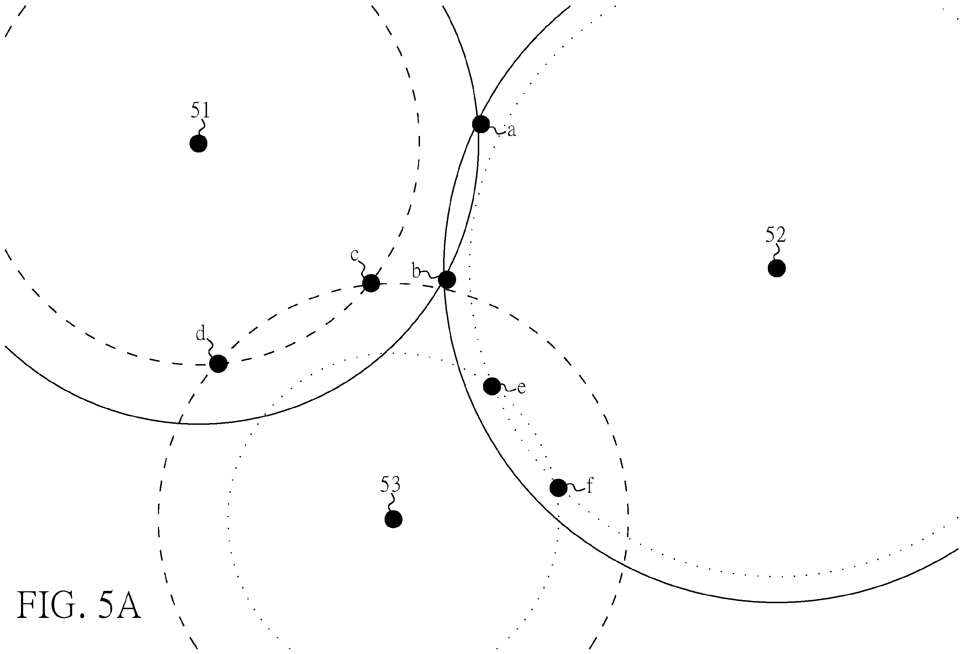

Hereafter, please refer to FIGs. 5A-5B are base to FIG. 4, to illustrate schematic diagrams of the concentric circles of the power positioning method under different transmission powers of the present invention.

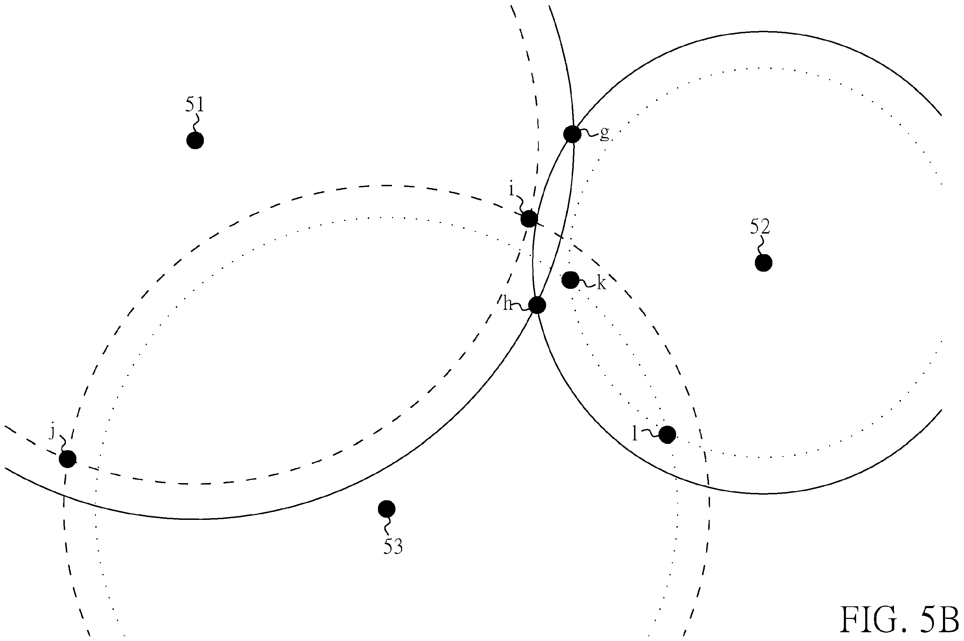

Therefore, in the present embodiment, a plurality of circles with the fixed point coordinates of the known location devices 51, 52, 53 are drawn as the center, and the fixed points are used to find out the intersection. In FIG. 5A, the original radius distance minus 0.67 standard deviation is set as the minimum radius, and the original radius distance plus 0.67 standard deviation is set as the maximum radius. If the two circles are tangent or intersect, it can be ended. As such, a plurality of intersections a-f among a plurality of circles can be obtained, that is, the circle of the known location devices 51, 52 has the intersections a, b, the circle of the known location device 51, 53 has the intersections c, d, and the circle of the known location devices 52, 53 has the intersections e, f. In each group of power, a maximum of 6 intersections can be obtained between the circles of known location devices 51, 52, 53, but the present invention is not limited to 6 intersections. FIG. 5B is a schematic diagram of the intersection calculated by known location devices 51, 52, 53 at another power. Accordingly, in FIG. 5B, six intersections g-l of known location device 51, 52, 53 at another power can be obtained.

Next, in Step 405: Performing a triangulation process on the plurality of intersections to obtain a plurality of triangles.

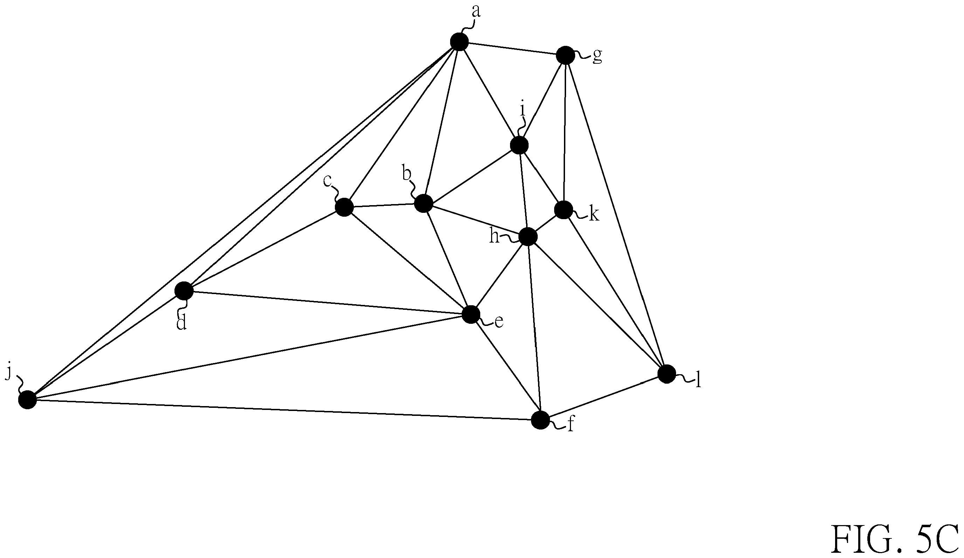

Hereafter, please refer to FIG. 5C is base to FIG. 4, to illustrate a schematic diagram of the triangulation process for the intersection of the power positioning method of the present invention.

At this time, the calculation module 13 removes outliers of all the intersections a-l and performs a Drouin triangulation process to obtain a plurality of triangles. In this embodiment, 12 intersections a-l obtained from two different powers are used for calculation, but the present invention is not limited thereto. More intersections can get more accurate results.

Finally, in Step 406: Finding out the triangle with the smallest circumscribed circle radius among the plurality of triangles to set the center of the circumscribed circle to be the device location of the device to be measured.

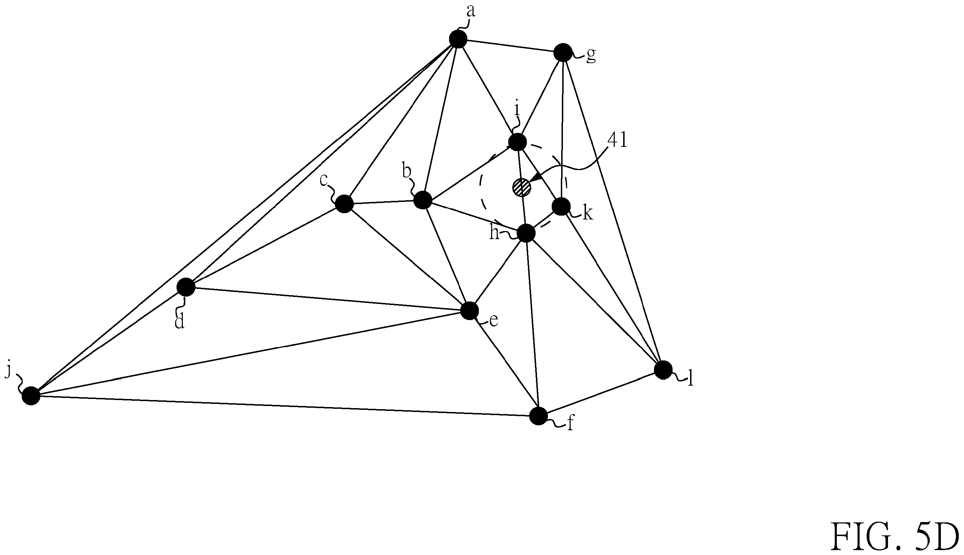

Hereafter, please refer to FIG. 5D is base to FIG. 4, to illustrate a schematic diagram of finding the smallest concentric circle according to the power positioning method of the present invention.

Finally, the calculation module 13 finds out the center of the smallest circumscribed circle in the triangle with the smallest circumscribed circle radius. The coordinate of the device to be measured 40 can be obtained by setting the center of the smallest circumscribed circle to be the device location 41 of the device to be measured 40. Taking FIG. 5D as an example, it can be obtained that the triangle formed by intersection i, h, k is the triangle with the smallest circumscribed circle radius. Therefore, the coordinate of the center of the circumscribed circle is the device location 41.

It should be noted here that the power positioning method of the present invention is not limited to the above order of steps. As long as the objective of the present invention can be achieved, the order of the above steps can also be changed.

With the power positioning method and power positioning device 1, the position of device to be measured 40 can be effectively found without too many additional sensing modules.

It should be noted that the embodiments of the present invention described above are only illustrative. The invention is defined solely by the appended claims.

## Claims

1. A power positioning method, used in a power positioning device (1) to find a device location (41) of a device to be measured (40) in a space, the space comprising a plurality of known location devices (50), the method comprising the following steps:
controlling the device to be measured (40) to transmit a plurality of positioning signals by a plurality of transmission powers;
causing the plurality of known location devices (50) to receive the plurality of positioning signals, and recording a plurality of positioning signal intensities, **a** plurality of corresponding receiving times and coordinates of the plurality of known location devices (50) to a database (12);
finding out a plurality of known location devices (50) with a larger signal intensity among the received plurality of positioning signals;
querying a signal intensity-distance function and a signal intensity-distance standard deviation function from the database (12) according to the plurality of positioning signal intensities, the plurality of corresponding receiving times and the known location devices (50) with the larger signal intensity;
grouping the plurality of known location devices (50) according to different powers and setting the plurality of the known location devices (50) as circle centers, using the signal intensity-distance function to obtain a distance, and using the standard deviation obtained by the signal intensity-distance standard
deviation function to draw a plurality of circles;
obtaining a plurality of intersections (a) between the plurality of circles;
performing a triangulation process on the plurality of intersections (a) to obtain a plurality of triangles; and
finding out a triangle with a smallest circumscribed circle radius among the plurality of triangles to set the center of the circumscribed circle to be the device location (41) of the device to be measured (40).

2. The power positioning method as claimed in claim 1 , further comprising the step of finding out three known location devices (50) with the larger signal intensity.

3. The power positioning method as claimed in claim 1, further comprising the step of receiving an identification code of the device to be measured (40).

4. The power positioning method as claimed in claim 1, further comprising a step of performing a data setting process, the data setting process comprising the steps of:
setting a plurality of transmission powers of a test transmitting device (20) so that the test transmitting device transmits a plurality of different test signals to a receiving device (30) at a plurality of corresponding distances, wherein the different test signals correspond to different transmission powers;
detecting intensities of the plurality of test signals received by the receiving device (30);
recording the intensities of the plurality of test signals and the plurality of corresponding distances to the database (12);
calculating the signal intensity-distance function and the signal intensity-distance standard deviation function for each transmission power according to the intensities of the plurality of test signals and the plurality of corresponding distances; and
storing the signal intensity-distance function and the signal intensity-distance standard deviation function to the database (12).

5. A power positioning device (1), used to find a device location (41) of a device to be measured (40) in a space, wherein the space further comprising a plurality of known location devices (50), the power positioning device (1) comprising:
a processing module (11), which controls the device to be measured (40) to transmit a plurality of positioning signals by a plurality of transmission powers, causing the plurality of known location devices (50) to receive the plurality of positioning signals;
a database (12), which is electrically connected to the processing module (11) and configured for storing a signal intensity-distance function and a signal intensity-distance standard deviation function, and after the plurality of known location devices (50) receive the plurality of positioning signals, the database (12) records the plurality of positioning signal intensities, a plurality of corresponding receiving times, and coordinates of the plurality of known location devices, such that the (50) processing module (11) finds out a plurality of known location devices (50) with a larger signal intensity among the received plurality of positioning signals; and
a calculation module (13), which is electrically connected to the database (12) and configured for querying the signal intensity-distance function and the signal intensity-distance standard deviation function according to the plurality of positioning signal intensities, the plurality of corresponding receiving times and the known location devices (50) with the larger signal intensity, and then the processing module (11) groups the plurality of known location devices (50) according to different powers and
te- sets the plurality of the known location devices (50) as circle centers, uses the signal intensity-distance function to obtain a distance, uses the signal intensity-distance standard deviation function to draw a plurality of circles, and obtains a plurality of intersections (a) between the plurality of circles, thereby the calculation module (13) performs a triangulation process on the plurality of intersections (a) to Z obtain a plurality of triangles and
find out a center of a smallest circumscribed circle among the triangles with the smallest circumscribed circle radius, and sets it to be the device location (41) of the device to be measured (40).

6. The power positioning device (1) as claimed in claim 5, wherein the processing module (11) finds out three known location devices (50) with the larger signal intensity.

7. The power positioning device (1) as claimed in claim 5, comprising receiving an identification code of the device to be measured (40).

8. The power positioning device (1) as claimed in claim 5, wherein the processing module (11) sets a plurality of transmission powers of a test transmitting device (20) to transmit a plurality of different test signals, causing a receiving device (30) to receive the plurality of test signals at a plurality of corresponding distances from the test transmitting device (20), wherein the different test signals correspond to different transmission powers; thereby the processing module (11) detects intensities of the plurality of test signals received by the receiving device (30) to record the intensities of the plurality of test signals and the plurality of corresponding distances to the database (12), such that the calculation module (13) calculates the signal intensity-distance function and the signal intensity-distance standard deviation function for each transmission power according to the intensities of the plurality of test signals and the plurality of corresponding distances and stores the signal intensity-distance function and the signal intensity-distance standard deviation function to the database.

## Patentansprüche

1. Leistung-Positionsbestimmung-Verfahren, welches in einer Leistung-Positionsbestimmung-Vorrichtung (1) verwendet wird, um eine Vorrichtungsposition (41) einer zu messenden Vorrichtung (40) in einem Raum zu finden, wobei der Raum mehrere Bekannte-Position-Vorrichtungen (50) aufweist, wobei das Verfahren die folgenden Schritte aufweist:
Steuern der zu messenden Vorrichtung (40), um mehrere Positionsbestimmungssignale mittels mehrerer Übermittlungsleistungen zu übermitteln;
Veranlassen der mehreren Bekannte-Position-Vorrichtungen (50), um die mehreren Positionsbestimmungssignale zu empfangen, und
Aufzeichnen von mehreren Positionsbestimmungssignalintensitäten, mehreren korrespondierenden Empfangszeiten und Koordinaten der mehreren Bekannte-Position-Vorrichtungen (50) in einer Datenbank (12);
Ermitteln von mehreren Bekannte-Position-Vorrichtungen (50) mit einer größeren Signalintensität von den empfangenen mehreren Positionsbestimmungssignalen;
Abfragen einer Signalintensität-Entfernung-Funktion und einer Signalintensität-Entfernung-Standardabweichung-Funktion von der Datenbank (12) gemäß den mehreren Positionsbestimmungssignalintensitäten, den mehreren korrespondierenden Empfangszeiten und den Bekannte-Position-Vorrichtungen (50) mit der größeren Signalintensität;
Gruppieren der mehreren Bekannte-Position-Vorrichtungen (50) gemäß unterschiedlichen Leistungen und Festlegen der mehreren Bekannte-Position-Vorrichtungen (50) als Kreismittelpunkte, unter Verwendung der Signalintensität-Entfernung-Funktion, um eine Entfernung zu erlangen, und unter Verwendung der Standardabweichung, welche mittels der Signalintensität-Entfernung-Standardabweichung-Funktion erlangt wird, um mehrere Kreise zu zeichnen;
Erlangen von mehreren Schnittstellen (a) zwischen den mehreren Kreisen;
Durchführen eines Triangulationsprozesses an den mehreren Schnittstellen (a), um mehrere Dreiecke zu erlangen; und
Ermitteln eines Dreiecks mit einem kleinsten Umschriebener-Kreis-Radius von den mehreren Dreiecken, um festzulegen, dass der Mittelpunkt des umschriebenen Kreises die Vorrichtungsposition (41) der zu messenden Vorrichtung (40) ist.

2. Leistung-Positionsbestimmung-Verfahren gemäß Anspruch 1, welches ferner den Schritt des Ermittelns von drei Bekannte-Position-Vorrichtungen (50) mit der größeren Signalintensität aufweist.

3. Leistung-Positionsbestimmung-Verfahren gemäß Anspruch 1, welches ferner den Schritt des Empfangens eines Identifikationscodes der zu messenden Vorrichtung (40) aufweist.

4. Leistung-Positionsbestimmung-Verfahren gemäß Anspruch 1, welches ferner einen Schritt zum Durchführen eines Dateneinstellprozesses aufweist, wobei der Dateneinstellprozess die folgenden Schritte aufweist:
Einstellen von mehreren Übermittlungsleistungen einer Testübermittlungsvorrichtung (20), so dass die Testübermittlungsvorrichtung mehrere unterschiedliche Testsignale an eine Empfangsvorrichtung (30) in mehreren korrespondierenden Entfernungen übermittelt, wobei die unterschiedlichen Testsignale mit unterschiedlichen Übermittlungsleistungen korrespondieren;
Detektieren von Intensitäten der mehreren Testsignale, welche mittels der Empfangsvorrichtung (30) empfangen werden;
Aufzeichnen der Intensitäten der mehreren Testsignale und die mehreren korrespondierenden Entfernungen in der Datenbank (12);
Berechnen der Signalintensität-Entfernung-Funktion und der Signalintensität-Entfernung-Standardabweichung-Funktion für jede Übermittlungsleistung gemäß den Intensitäten der mehreren Testsignale und den mehreren korrespondierenden Entfernungen; und
Speichern der Signalintensität-Entfernung-Funktion und der Signalintensität-Entfernung-Standardabweichung-Funktion in der Datenbank (12).

5. Leistung-Positionsbestimmung-Vorrichtung (1), welche dazu verwendet wird, um eine Vorrichtungsposition (41) einer zu messenden Vorrichtung (40) in einem Raum zu finden, wobei der Raum ferner mehrere Bekannte-Position-Vorrichtungen (50) aufweist, wobei die Leistung-Positionsbestimmung-Vorrichtung (1) aufweist:
ein Verarbeitungsmodul (11), welches die zu messende Vorrichtung (40) steuert, um mehrere Positionsbestimmungssignale mit mehreren Übermittlungsleistungen zu übermitteln, was die mehreren Bekannte-Position-Vorrichtungen (50) dazu veranlasst, die mehreren Positionsbestimmungssignale zu empfangen;
eine Datenbank (12), welche elektrisch mit dem Verarbeitungsmodul (11) verbunden ist und konfiguriert ist zum Speichern einer Signalintensität-Entfernung-Funktion und einer Signalintensität-Entfernung-Standardabweichung-Funktion, und wobei, nachdem die mehreren Bekannte-Position-Vorrichtungen (50) die mehreren Positionsbestimmungssignale empfangen haben, die Datenbank (12) die mehreren Positionsbestimmungssignalintensitäten, mehrere korrespondierende Empfangszeiten und Koordinaten der mehreren Bekannte-Position-Vorrichtungen aufzeichnet derart, dass das Verarbeitungsmodul (11) mehrere Bekannte-Position-Vorrichtungen (50) mit einer größeren Signalintensität von den mehreren empfangenen Positionsbestimmungssignalen ermittelt; und
ein Berechnungsmodul (13), welches elektrisch mit der Datenbank (12) verbunden ist und konfiguriert ist zum Abfragen der Signalintensität-Entfernung-Funktion und der Signalintensität-Entfernung-Standardabweichung-Funktion gemäß den mehreren Positionsbestimmungssignalintensitäten, den mehreren korrespondierenden Empfangszeiten und den Bekannte-Position-Vorrichtungen (50) mit der größeren Signalintensität,
und wobei dann das Verarbeitungsmodul (11) die mehreren Bekannte-Position-Vorrichtungen (50) gemäß unterschiedlichen Leistungen gruppiert und die mehreren Bekannte-Position-Vorrichtungen (50) als Kreismittelpunkte festlegt, die Signalintensität-Entfernung-Funktion dazu verwendet, um eine Entfernung zu erlangen, die Signalintensität-Entfernung-Standardabweichung-Funktion dazu verwendet, um mehrere Kreise zu zeichnen, und mehrere Schnittstellen (a) zwischen den mehreren Kreisen erlangt, wodurch das Berechnungsmodul (13) einen Triangulationsprozess an den mehreren Schnittstellen (a) durchführt, um mehrere Dreiecke zu erlangen und einen Mittelpunkt eines kleinsten umschriebenen Kreises von den Dreiecken mit dem kleinsten Umschriebener-Kreis-Radius zu ermitteln, und ihn als die Vorrichtungsposition (41) der zu messenden Vorrichtung (40) festlegt.

6. Leistung-Positionsbestimmung-Vorrichtung (1) gemäß Anspruch 5, wobei das Verarbeitungsmodul (11) drei Bekannte-Position-Vorrichtungen (50) mit der größeren Signalintensität ermittelt.

7. Leistung-Positionsbestimmung-Vorrichtung (1) gemäß Anspruch 5, welche das Empfangen eines Identifikationscodes der zu messenden Vorrichtung (40) aufweist.

8. Leistung-Positionsbestimmung-Vorrichtung (1) gemäß Anspruch 5, wobei das Verarbeitungsmodul (11) mehrere Übermittlungsleistungen einer Testübermittlungsvorrichtung (20) einstellt, um mehrere unterschiedliche Testsignale zu übermitteln, wodurch eine Empfangsvorrichtung (30) dazu veranlasst wird, die mehreren Testsignale in mehreren korrespondierenden Entfernungen von der Testübermittlungsvorrichtung (20) aus zu empfangen, wobei die unterschiedlichen Testsignale mit unterschiedlichen Übermittlungsleistungen korrespondieren; wodurch das Verarbeitungsmodul (11) Intensitäten von den mehreren Testsignalen, welche mittels der Empfangsvorrichtung (30) empfangen werden, detektiert, um die Intensitäten der mehreren Testsignale und die mehreren korrespondierenden Entfernungen in der Datenbank (12) zu speichern derart, dass das Berechnungsmodul (13) die Signalintensität-Entfernung-Funktion und die Signalintensität-Entfernung-Standardabweichung-Funktion für jede Übermittlungsleistung gemäß den Intensitäten der mehreren Testsignale und den mehreren korrespondierenden Entfernungen berechnet und die Signalintensität-Entfernung-Funktion und die Signalintensität-Entfernung-Standardabweichung-Funktion in der Datenbank speichert.

## Revendications

1. Procédé de positionnement de puissance utilisé dans un dispositif de positionnement de puissance (1) pour trouver une localisation de dispositif (41) d'un dispositif (40) à mesurer dans un espace, l'espace comprenant une pluralité de dispositifs de localisation connue (50), le procédé comprenant les étapes suivantes consistant à :
commander le dispositif à mesurer (40) pour transmettre une pluralité de signaux de positionnement au moyen d'une pluralité de puissances de transmission ;
amener la pluralité de dispositifs de localisation connue (50) à recevoir la pluralité de signaux de positionnement, et enregistrer dans une base de données (12) une pluralité d'intensités de signal de positionnement, une pluralité de temps de réception correspondants et des coordonnées de la pluralité de dispositifs de localisation connue (50) ;
trouver une pluralité de dispositifs de localisation connue (50) ayant une intensité de signal plus élevée parmi la pluralité de signaux de positionnement reçus ;
requêter une fonction d'intensité de signal-distance et une fonction d'intensité de signal-distance écart-type à partir de la base de données (12) selon la pluralité d'intensités de signal de positionnement, la pluralité de temps de réception correspondants et les dispositifs de localisation connue (50) avec l'intensité de signal plus élevée ;
regrouper la pluralité de dispositifs de localisation connue (50) selon des puissances différentes et définir la pluralité de dispositifs de localisation connue (50) en tant que centres de cercle, en utilisant la fonction d'intensité de signal-distance pour obtenir une distance et en utilisant l'écart-type obtenu au moyen de la fonction d'intensité de signal-distance écart-type pour tracer une pluralité de cercles ;
obtenir une pluralité d'intersections (a) entre la pluralité de cercles ;
effectuer un processus de triangulation sur la pluralité d'intersections (a) afin d'obtenir une pluralité de triangles ; et
trouver un triangle ayant un rayon de cercle circonscrit le plus petit parmi la pluralité de triangles afin de déterminer que le centre du cercle circonscrit est la localisation de dispositif (41) du dispositif (40) à mesurer.

2. Procédé de positionnement de puissance selon la revendication 1, comprenant en outre l'étape consistant à trouver trois dispositifs de localisation connue (50) avec l'intensité de signal plus élevée.

3. Procédé de positionnement de puissance selon la revendication 1, comprenant en outre l'étape consistant à recevoir un code d'identification du dispositif (40) à mesurer.

4. Procédé de positionnement de puissance selon la revendication 1, comprenant en outre une étape de mise en œuvre d'un processus de définition de données, le processus de définition de données comprenant les étapes suivantes consistant à :
définir une pluralité de puissances de transmission d'un dispositif de transmission de test (20) de sorte que le dispositif de transmission de test transmette une pluralité de signaux de test différents à un dispositif de réception (30) à une pluralité de distances correspondantes, les signaux de test différents correspondant à des puissances de transmission différentes ;
détecter des intensités de la pluralité de signaux de test reçus par le dispositif de réception (30) ;
enregistrer les intensités de la pluralité de signaux de test et la pluralité de distances correspondantes dans la base de données (12) ;
calculer la fonction d'intensité de signal-distance et la fonction d'intensité de signal-distance écart-type pour chaque puissance de transmission selon les intensités de la pluralité de signaux de test et la pluralité de distances correspondantes ; et
stocker la fonction d'intensité de signal-distance et la fonction d'intensité de signal-distance écart-type dans la base de données (12).

5. Dispositif de positionnement de puissance (1) utilisé pour trouver une localisation de dispositif (41) d'un dispositif (40) à mesurer dans un espace, l'espace comprenant en outre une pluralité de dispositifs de localisation connue (50), le dispositif de positionnement de puissance (1) comprenant :
un module de traitement (11) qui commande le dispositif à mesurer (40) pour transmettre une pluralité de signaux de positionnement par une pluralité de puissances de transmission, ce qui amène la pluralité de dispositifs de localisation connue (50) à recevoir la pluralité de signaux de positionnement ;
une base de données (12) connectée électriquement au module de traitement (11) et configurée pour stocker une fonction d'intensité de signal-distance et une fonction d'intensité de signal-distance écart-type, et où, après que la pluralité de dispositifs de localisation connue (50) a reçu la pluralité de signaux de positionnement, la base de données (12) enregistre la pluralité d'intensités de signal de positionnement, une pluralité de temps de réception correspondants et des coordonnées de la pluralité de dispositifs de localisation connue de telle sorte que le module de traitement (11) trouve une pluralité de dispositifs de localisation connue (50) avec une intensité de signal plus élevée parmi la pluralité de signaux de positionnement reçus ; et
un module de calcul (13) connecté électriquement à la base de données (12) et configuré pour requêter la fonction d'intensité de signal-distance et la fonction d'intensité de signal-distance écart-type selon la pluralité d'intensités de signal de positionnement, la pluralité de temps de réception correspondants et des dispositifs de localisation connue (50) avec l'intensité de signal plus élevée, et dans lequel ensuite le module de traitement (11) regroupe la pluralité de dispositifs de localisation connue (50) selon des puissances différentes et définit la pluralité des dispositifs de localisation connue (50) comme des centres de cercle, utilise la fonction d'intensité de signal-distance pour obtenir une distance, utilise la fonction d'intensité de signal-distance écart-type pour tracer une pluralité de cercles, et obtient une pluralité d'intersections (a) entre la pluralité de cercles, moyennant quoi le module de calcul (13) exécute un processus de triangulation sur la pluralité d'intersections (a) pour obtenir une pluralité de triangles et trouver un centre d'un cercle circonscrit le plus petit parmi les triangles ayant le rayon de cercle circonscrit le plus petit, et le définit comme la localisation de dispositif (41) du dispositif (40) à mesurer.

6. Dispositif de positionnement de puissance (1) selon la revendication 5, dans lequel le module de traitement (11) trouve trois dispositifs de localisation connue (50) avec l'intensité de signal plus élevée.

7. Dispositif de positionnement de puissance (1) selon la revendication 5, comprenant la réception d'un code d'identification du dispositif à mesurer (40).

8. Dispositif de positionnement de puissance (1) selon la revendication 5, dans lequel le module de traitement (11) définit une pluralité de puissances de transmission d'un dispositif de transmission de test (20) pour transmettre une pluralité de signaux de test différents, amenant ainsi un dispositif de réception (30) à recevoir la pluralité de signaux de test à une pluralité de distances correspondantes à partir du dispositif de transmission de test (20), les différents signaux de test correspondant à des puissances de transmission différentes ; moyennant quoi le module de traitement (11) détecte des intensités de la pluralité de signaux de test reçus par le dispositif de réception (30) pour stocker les intensités de la pluralité de signaux de test et la pluralité de distances correspondantes dans la base de données (12) de sorte que le module de calcul (13) calcule la fonction d'intensité de signal-distance et la fonction d'intensité de signal-distance écart-type pour chaque puissance de transmission selon les intensités de la pluralité de signaux de test et la pluralité de distances correspondantes, et stocke la fonction d'intensité de signal-distance et la fonction d'intensité de signal-distance écart-type dans la base de données.
